# EUROPEAN PATENT APPLICATION

(11) **EP 4 321 991 A1**
(43) Date of publication of application: **14.02.2024**
(21) Application number: 22902919.4
(22) Date of filing: 05.09.2022
(51) Int. Cl.: G06F 8/38, G06F 9/445

(54) **NATIVE SYSTEM-BASED DERIVED SOFTWARE CONSTRUCTION METHOD AND SYSTEM, AND DEVICE**

(30) Priority: 10.12.2021 CN 202111504046
(71) Applicant: Shanghai Tosun Technology Ltd., Shanghai 201804 (CN)
(72) Inventor: LIU, Chu, Shanghai 201804 (CN); XIE, Yueyin, Shanghai 201804 (CN); MO, Mang, Shanghai 201804 (CN)
(74) Representative: Sun, Yanan
(86) International application number: PCT/CN2022/116995
(87) International publication number: WO 2023/103491

(57) **Abstract**

The present invention belongs to the technical field of software derivation, specifically relates to a method, system, and device for constructing derived software based on a native system. The method for constructing the derived software based on the native system includes: editing a user interface of the derived software and saving the user interface of the derived software as a derived software interface configuration file and generating a user-designed interface according to the derived software interface configuration file. It is realized that a software platform can distinguish the dependent items of different user modules and selectively load the desired kernel module in the subsequent process of loading user modules, thereby saving the consumption of the CPU and memory of the system and improving the efficiency of users using the software platform.

## Description

### TECHNICAL FIELD

The present invention belongs to the technical field of software derivation, specifically relates to a method, system, and device for constructing derived software based on a native system.

### BACKGROUND

The prior software platform, such as Matlab software, allows users to re-develop on it, so as to obtain the desired user interface and functions. After finishing the re-development, a software module loaded on the prior software platform is obtained. If users want the software module designed by themselves to operate, the software platform needs to be operated first, and the user software module is loaded through the software platform-supporting mode before opening the user interface and performing the desired functions.

Due to the many functions of the prior software platform, it requires use of a large amount of system resources to load a complete platform. Even if the scale of the user software module is very small, the user software module can be loaded and operated only after the whole software platform itself is fully loaded. In the case that multiple software modules of the user software need to operate simultaneously, the system resources consumed by the software platform on which each user software module depends will be superimposed, resulting in the depletion of system resources.

Therefore, based on the above technical problems, it is necessary to design a new method, system, and device for constructing derived software based on a native system.

### SUMMARY

An objective of the present invention is to provide a method, system, and device for constructing derived software based on a native system.

To solve the above technical problems, the present invention provides a method for constructing derived software based on a native system. The method includes:
editing a user interface of the derived software and saving the user interface of the derived software as a derived software interface configuration file; and
generating a user-designed interface according to the derived software interface configuration file.

Further, the method of editing the user interface of the derived software and saving the user interface of the derived software as the derived software interface configuration file includes:
editing the user interface of the derived software and saving the user interface of the derived software as the derived software interface configuration file through a derived software interface editor of a software platform; and
operating the software platform and the derived software through a software platform kernel module of the software platform.

Further, the method of generating the user-designed interface according to the derived software interface configuration file includes:
first reading, by the software platform, the derived software interface configuration file under a user module-operating state, and obtaining a kernel module that a current user module depends on from the derived software interface configuration file;
loading, by the software platform, only the kernel module that the current user module depends on and a derived software interface display module.

Further, the method of generating the user-designed interface according to the derived software interface configuration file further includes:
reading, by the derived software interface display module in the software platform, the derived software interface configuration file, and generating the user-designed interface according to information in the configuration file.

In the second aspect, the present invention further provides a system for constructing derived software based on a native system. The system includes:
an edition module configured for editing a user interface of the derived software and saving the user interface of the derived software as a derived software interface configuration file; and
an interface generation module configured for generating a user-designed interface according to the derived software interface configuration file.

In the third aspect, the present invention further provides a derived software device. The derived software device includes:
a software platform kernel module, a derived software management module, and a derived software interface display module.

The software platform kernel module is configured for controlling the derived software management module to edit a user interface of a derived software and save the user interface of the derived software as a derived software interface configuration file.

The software platform kernel module is configured for controlling the derived software interface display module to generate a user-designed interface according to the derived software interface configuration file.

Further, the derived software device further includes other software modules of the software platform.

The other software modules of the software platform are configured for operating depending on the software platform kernel module.

Further, the derived software management module includes a derived software interface editor.

The derived software interface editor is configured for editing the user interface of the derived software and saving the user interface of the derived software as the derived software interface configuration file.

The advantages of the present invention are as follows: in the present invention, the user interface of the derived software is edited and saved as the derived software interface configuration file, and the user-designed interface is generated according to the derived software interface configuration file. It is realized that the software platform can distinguish the dependent items of different user modules and selectively load the desired kernel module in the subsequent process of loading user modules, thereby saving the consumption of the center processing unit (CPU) and memory of the system and improving the efficiency of users using the software platform.

Other features and advantages of the present invention will be described in the subsequent specification and will become apparent in part from the specification or understood through the implementation of the present invention. The objective and other advantages of the present invention are realized and obtained by the structure specifically pointed out in the specification and the drawings.

In order to make the above-mentioned objectives, features, and advantages of the present invention more apparent and easy to understand, the preferred embodiments are given below and described in detail in conjunction with the drawings.

### BRIEF DESCRIPTION OF THE DRAWINGS

In order to illustrate the specific embodiments of the present invention or the technical solutions more clearly in the prior art, the drawings that need to be used in the description of the specific embodiments or prior art will be briefly described below. The drawings described below are some embodiments of the present invention, and for those having ordinary skill in the art, other drawings can be obtained according to these drawings without creative effort.
FIG. 1 is a flowchart of a method for constructing derived software based on a native system according to the present invention.
FIG. 2 is a schematic diagram showing the principle of constructing the derived software on a software platform according to the present invention.
FIG. 3 is a schematic diagram showing the principle of the derived software operating in the software platform according to the present invention.
FIG. 4 is an example showing a controller area network (CAN) communication test system based on the software platform according to the present invention.

### DETAILED DESCRIPTION OF THE EMBODIMENTS

To make the objective, technical solutions, and advantages of the embodiments of the present invention clearer, the technical solutions of the present invention will be described clearly and completely below in conjunction with the drawings. The described embodiments are part of the embodiments of the present invention, not all embodiments. Based on the embodiments of the present invention, all other embodiments obtained by ordinary persons skilled in the art without creative work shall fall within the scope of protection of the present invention.

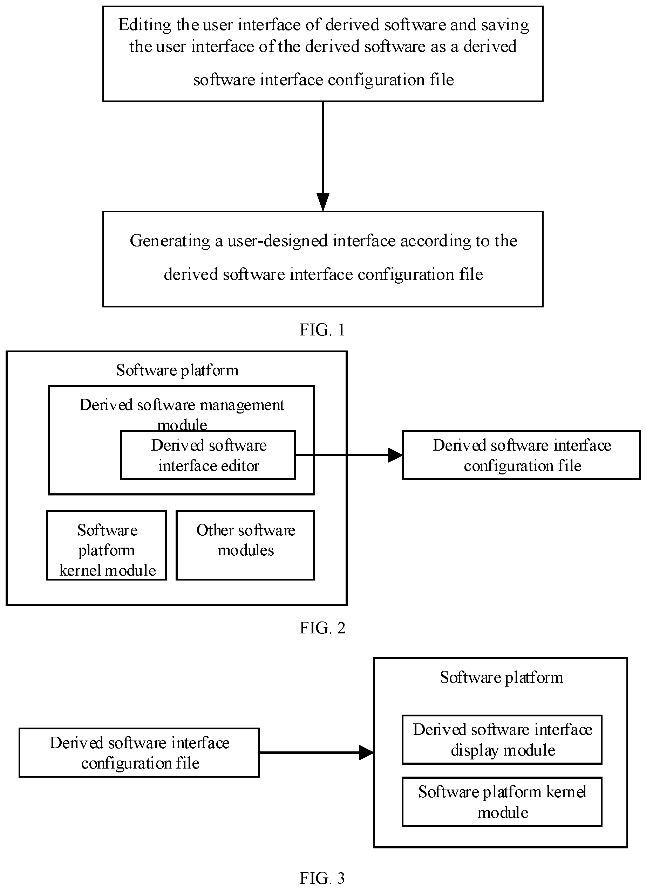

As shown in FIG. 1, this embodiment provides a method for constructing derived software based on a native system. The method includes: editing a user interface of the derived software and saving the user interface of the derived software as a derived software interface configuration file and generating a user-designed interface according to the derived software interface configuration file. It is realized that a software platform can distinguish the dependent items of different user modules and selectively load the desired kernel module in the subsequent process of loading user modules, thereby saving the consumption of the CPU and memory of the system and improving the efficiency of users using the software platform.

As shown in FIG. 2, in this embodiment, the derived software constructed based on the native system includes: a software platform kernel module, other software modules of the software platform, a derived software management module, and a derived software interface display module. The software platform includes a derived software management module, a software platform kernel module, and other software modules. The derived software management module includes a derived software interface editor.

In this embodiment, the method of editing the user interface of the derived software and saving the user interface of the derived software as the derived software interface configuration file includes: editing the user interface of the derived software and saving the user interface of the derived software as the derived software interface configuration file by a user through the derived software interface editor of the software platform; and operating the software platform and the derived software through the software platform kernel module of the software platform. The software platform kernel module is the software module that the operation of both the software platform itself and the derived software must depend on, and the software platform kernel module is unconditionally loaded when the software platform is operating. Other software modules are other modules that operates depending on the software platform kernel module, and can be dynamically loaded and unloaded when the software platform is operating.

As shown in FIG. 3, in the present embodiment, the method of generating the user-designed interface according to the derived software interface configuration file includes: forming the software platform by a derived software interface display module and a software platform kernel module in a user-operating state; first reading, by the software platform, the derived software interface configuration file under a user module-operating state, and obtaining a kernel module that a current user module depends on from the derived software interface configuration file; and loading, by the software platform, only the kernel module that the current user module depends on and the derived software interface display module.

In this embodiment, the method of generating the user-designed interface according to the derived software interface configuration file further includes: reading, by the derived software interface display module in the software platform, the derived software interface configuration file, and generating the user-designed interface according to the information in the configuration file, so that the user can further operate on the interface. In the user-operating state, the software platform kernel module and the derived software interface display module are selectively loaded by the software platform, but other software modules are not loaded. Thus, the startup speed of the software platform is improved, the resource consumption is reduced, and the derived software can be used separately from the native system, so as to reduce the CPU and memory resources occupied by the native system and improve the response speed of the user software module.

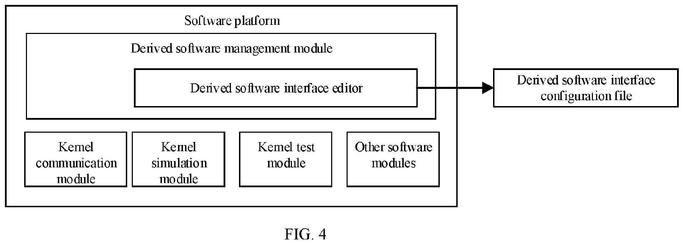

As shown in FIG. 4, specifically, this embodiment provides an example of a CAN communication test system based on a software platform, which is formed by an automobile network software platform and a derived software interface configuration file. The automobile network software platform is a native system that provides underlying support for the user software module. The derived software interface configuration file is a software module designed by the user based on the software platform. The software platform includes a derived software management module and a plurality of basic modules. The plurality of basic modules include a kernel communication module, a kernel simulation module, a kernel test module, and other software modules. The derived software interface configuration file operates depending on the kernel communication module and not depending on the kernel simulation module, the kernel test module and other software modules. The derived software interface configuration file is loaded by the software platform. During the loading process, the software platform analyzes the kernel module that the derived software depends on, and learns that the kernel communication module is the module that the derived software depends on, and other modules are not dependent items. The software platform continues to load the kernel module according to the dependent item to complete the loading and initialization of the derived software. The software platform selectively loads the kernel communication module and avoids the loading of other modules, thereby improving the startup speed of the software platform and reducing the occupation of system resources.

In this embodiment, a system for constructing derived software based on a native system can also be provided according to the method for constructing the derived software based on the native system. The system includes: an edition module configured for editing a user interface of the derived software and saving the user interface of the derived software as a derived software interface configuration file; and an interface generation module configured for generating a user-designed interface according to the derived software interface configuration file.

In this embodiment, a derived software device is constructed according to the method for constructing the derived software based on the native system. The derived software device includes a software platform kernel module, a derived software management module, and a derived software interface display module. The software platform kernel module is configured for controlling the derived software management module to edit the user interface of the derived software and save the user interface of the derived software as the derived software interface configuration file. The software platform kernel module is configured for controlling the derived software interface display module to generate the user-designed interface according to the derived software interface configuration file. The software platform is modularized, and the dependent items of the relevant modules of the software platform are saved in the user module, so as to avoid loading the whole software platform when the user module is started separately, which reduces the occupation of the system resources and improves the startup speed of the user-derived software. The software platform can distinguish the dependent items of different user modules and selectively load the desired kernel module in the subsequent process of loading user modules, thereby saving the consumption of the CPU and memory of the system and improving the efficiency of users using the software platform.

In this embodiment, the derived software device further includes: other software modules of the software platform. The other software modules of the software platform are configured for operating depending on the software platform kernel module.

In this embodiment, the derived software management module includes a derived software interface editor. The derived software interface editor is configured for editing the user interface of the derived software and saving the user interface of the derived software as the derived software interface configuration file.

In conclusion, in the present invention, the user interface of the derived software is edited and saved as the derived software interface configuration file, and the user-designed interface is generated according to the derived software interface configuration file. It is realized that the software platform can distinguish the dependent items of different user modules and selectively load the desired kernel module in the subsequent process of loading user modules, thereby saving the consumption of the CPU and memory of the system and improving the efficiency of users using the software platform.

In several embodiments provided in the present invention, it should be understood that the device and method disclosed can also be implemented in other ways. The device embodiments described above are only schematic. For example, the flow chart and block diagram in the drawings show the possible architecture, functions and operations of devices, methods, and computer program products according to multiple embodiments of the present invention. At this point, each box in the flow chart or block diagram may represent a part of a module, a program segment, or a code, and the part of the module, the program segment, or the code contains one or more executable instructions for implementing a specified logical function. It should also be noted that in some alternative implementations, the functions marked in the box may also occur in an order different from that indicated in the drawings. For example, two consecutive boxes can actually be executed basically in parallel, and they can sometimes be executed in the opposite order, which depends on the functions involved. It should also be noted that each box in the block diagram and/or flow chart, and the combination of blocks in the block diagram and/or flow chart, may be implemented by a dedicated hardware-based system that performs a specified function or action, or by a combination of dedicated hardware and computer instructions.

In addition, each functional module in each embodiment of the present invention can be integrated to form an independent part, or each module can exist independently, or two or more modules can be integrated to form an independent part.

If the function is implemented in the form of a software function module and sold or used as an independent product, it can be stored in a computer-readable storage medium. Based on this understanding, the technical solution of the present invention, in essence, is that the part that contributes to the prior art or a part of the technical solution can be reflected in the form of a software product. The computer software product is stored in a storage medium and includes a plurality of instructions to allow a computer device (such as a personal computer, a server, or network equipment, etc.) to perform all or part of the steps of the method described in each embodiment of the present invention. The aforementioned storage medium includes a USB flash drive, a mobile hard disk drive, a read-only memory (ROM), a random access memory (RAM), a magnetic disk, an optical disc, and other media that can store program codes.

Taking the above ideal embodiments according to the present invention as inspiration, through the above explanation content, those skilled in the art may make various changes and modifications without deviating from the scope of the technical idea of the present invention. The technical scope of the present invention is not limited to the contents of the specification, but must be determined according to the scope of the claims.

## Claims

1. A method for constructing a derived software based on a native system comprising:
editing a user interface of the derived software and saving the user interface of the derived software as a derived software interface configuration file; and
generating a user-designed interface according to the derived software interface configuration file.

2. The method for constructing the derived software based on the native system according to claim 1, wherein
a method of editing the user interface of the derived software and saving the user interface of the derived software as the derived software interface configuration file comprises:
editing the user interface of the derived software and saving the user interface of the derived software as the derived software interface configuration file through a derived software interface editor of a software platform; and
operating the software platform and the derived software through a software platform kernel module of the software platform.

3. The method for constructing the derived software based on the native system according to claim 2, wherein
a method of generating the user-designed interface according to the derived software interface configuration file comprises:
first reading, by the software platform, the derived software interface configuration file under a user module-operating state, and obtaining a kernel module that a current user module depends on from the derived software interface configuration file;
loading, by the software platform, only the kernel module that the current user module depends on and a derived software interface display module.

4. The method for constructing the derived software based on the native system according to claim 3, wherein
the method of generating the user-designed interface according to the derived software interface configuration file further comprises:
reading, by the derived software interface display module in the software platform, the derived software interface configuration file, and generating the user-designed interface according to information in the configuration file.

5. A system for constructing a derived software based on a native system, comprising:
an edition module configured for editing a user interface of the derived software and saving the user interface of the derived software as a derived software interface configuration file; and
an interface generation module configured for generating a user-designed interface according to the derived software interface configuration file.

6. A derived software device comprising:
a software platform kernel module, a derived software management module, and a derived software interface display module;
wherein the software platform kernel module is configured for controlling the derived software management module to edit a user interface of a derived software and save the user interface of the derived software as a derived software interface configuration file; and
the software platform kernel module is configured for controlling the derived software interface display module to generate a user-designed interface according to the derived software interface configuration file.

7. The derived software device according to claim 6, wherein
the derived software device further comprises other software modules of the software platform;
wherein the other software modules of the software platform are configured for operating depending on the software platform kernel module.

8. The derived software device according to claim 7, wherein
the derived software management module comprises a derived software interface editor;
wherein the derived software interface editor is configured for editing the user interface of the derived software and saving the user interface of the derived software as the derived software interface configuration file.
